**Europäisches Patentamt**

**European Patent Office**

**Office européen des brevets**

(19)

(11) Numéro de publication : **0 093 479**
**B1**

(12)

# FASCICULE DE BREVET EUROPÉEN

(45) Date de publication du fascicule du brevet :
28.09.88

(51) Int. Cl.⁴ : **H 04 J 3/16**, H 04 L 11/16,
H 04 J 3/06

(21) Numéro de dépôt : 83200635.7

(22) Date de dépôt : 03.05.83

(54) **Dispositif de recalage d'informations pour émettre dans un multiplex temporel sortant des informations provenant d'un multiplex temporel entrant.**

(30) Priorité : 05.05.82 FR 8207786

(43) Date de publication de la demande :
09.11.83 Bulletin 83/45

(45) Mention de la délivrance du brevet :
28.09.88 Bulletin 88/39

(84) Etats contractants désignés :
DE FR GB NL

(56) Documents cités :
CH-A- 517 419
FR-A- 2 144 112
FR-A- 2 165 182
FR-A- 2 296 973

(73) Titulaire : TELECOMMUNICATIONS RADIOELECTRI-
QUES ET TELEPHONIQUES T.R.T.
88, rue Brillat Savarin
F-75013 Paris (FR)
FR
N.V. Philips' Gloeilampenfabrieken
Groenewoudseweg 1
NL-5621 BA Eindhoven (NL)
DE GB NL

(72) Inventeur : Grima, Jean-Claude
Société Civile S.P.I.D. 209, rue de l'Université
F-75007 Paris (FR)
Inventeur : Pando, Bernard
Société Civile S.P.I.D. 209, rue de l'Université
F-75007 Paris (FR)
Inventeur : David, Guy Albert Jules
Société Civile S.P.I.D. 209, rue de l'Université
F-75007 Paris (FR)

(74) Mandataire : Chaffraix, Jean et al
Société Civile S.P.I.D. 209, rue de l'Université
F-75007 Paris (FR)

EP 0 093 479 B1

## Description

La présente invention concerne un dispositif de recalage d'informations pour émettre dans un multiplex temporel sortant des informations provenant d'un multiplex temporel entrant, lesdits multiplex temporels étant prévus pour des canaux à cadence rapide et à cadence lente, les canaux à cadence rapide étant formés d'espaces de temps repérés dans une trame, tandis que les canaux à cadence lente sont formés d'espaces de temps distribués dans des trames successives et repérés dans une multitrame englobant une pluralité de trames, dispositif de recalage d'informations formé d'un ensemble de mémorisation qui est muni d'une entrée et d'une sortie de données et auquel sont affectés, d'une part, un circuit d'écriture pour y inscrire, au rythme du multiplex entrant, les informations de ce multiplex et, d'autre part, un circuit de lecture pour fournir à un organe de retard les informations à cadence lente à la sortie des données dudit ensemble et les informations à cadence rapide à un circuit de combinaison, ce circuit de combinaison étant prévu pour fournir le multiplex sortant en combinant les informations à cadence rapide issues de l'ensemble de mémorisation avec les informations à cadence lente issues de l'organe de retard.

Un tel dispositif est décrit dans le document FR-A 2 296 973. Dans ce document, pour l'ensemble de mémorisation, on préconise une capacité prévue pour contenir une trame au lieu d'une capacité d'une multitrame. Ce genre de dispositif convient bien lorsque des retards de faible amplitude affectent le multiplex entrant. Il n'en est plus de même lorsque ces retards peuvent devenir importants. C'est le cas notamment lorsque le dispositif de recalage est inséré dans un système en boucle interconnectant une pluralité d'unités. La mise en place ou le retard de ces unités amène des fluctuations de retard importantes. Il arrive alors que la mémoire soit sollicitée en même temps pour une écriture et une lecture, ce qui amène des troubles de fonctionnement. Il est à noter que le document précité n'aborde pas ce problème et, donc, ne peut convenir pour l'application envisagée.

La présente invention propose un dispositif de recalage d'informations qui évite, dans une large mesure, l'inconvénient d'une lecture et d'une écriture simultanées d'une même mémoire. Pour cela, un tel dispositif est remarquable en ce que l'ensemble de mémorisation est formé de « n », n > 1, mémoires dont la capacité de chacune est suffisante pour contenir une trame, le nombre des trames formant une multitrame étant plus grand que n et en ce qu'il est prévu des moyens pour éviter qu'une même mémoire soit sollicitée en même temps par le circuit de lecture et le circuit d'écriture.

La description suivante faite en regard des dessins annexés, le tout donné à titre d'exemple non limitatif, fera bien comprendre comment l'invention peut être réalisée.

La figure 1 représente l'organisation d'un multiplex comportant des canaux à cadence rapide et des canaux à cadence lente.

La figure 2 représente un système en boucle comportant un dispositif de recalage.

La figure 3 montre en détail le mode de réalisation d'un dispositif de recalage conforme à l'invention.

Les figures 4 et 5 sont utilisées pour montrer le fonctionnement d'un dispositif de l'invention.

La figure 6 montre un mode de réalisation de l'organe de retard faisant partie du dispositif de l'invention.

Les figures 7 et 8 sont utilisées pour montrer le fonctionnement de l'organe de retard.

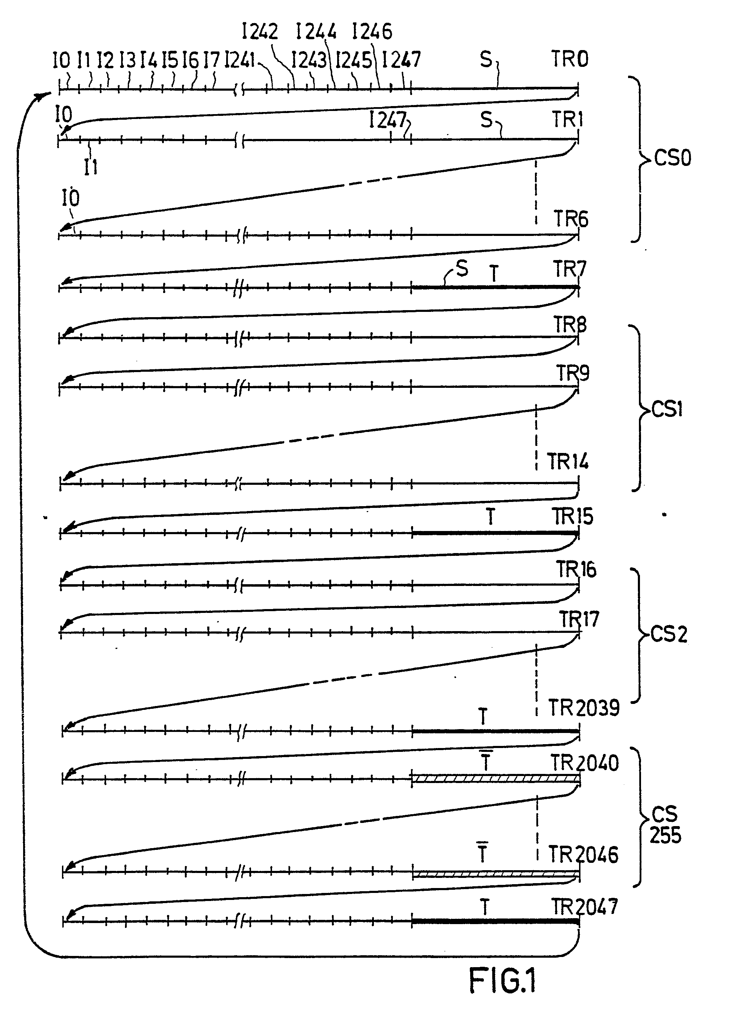

La figure 1 représente l'organisation d'un multiplex présentant deux sortes de canaux, une à cadence rapide et une à cadence lente.

Les canaux à cadence rapide sont constitués par des espaces de temps I0, I1, I2, ... I247, disposés dans différentes trames TR0, TR1, ... TR2047. Pour fixer les idées, ces intervalles de temps contiennent chacun un élément binaire.

Les canaux à cadence lente sont constitués par des espaces de temps S situés en fin de trame et après l'espace I247 ; ces espaces de temps S contiennent huit éléments binaires et sont disposés dans des intervalles de temps IT248 à IT255 dont il sera question plus loin. Le canal CS0 à cadence lente est formé des espaces S des trames TR0, TR1, ... TR6 ; le canal CS1 des trames TR8, TR9, ... TR14, etc... ; les espaces de temps S des trames TR7, TR15, ... TR2047 contiennent le code de trame T utilisé pour définir les intervalles de temps I0, I1, ..., les intervalles S des trames TR2040 à TR2046 (soit le canal CS255) contiennent le code de multitrame T̄ (complémentaire du code T) qui permet de numéroter les différents canaux CS0, CS1, ... CS255.

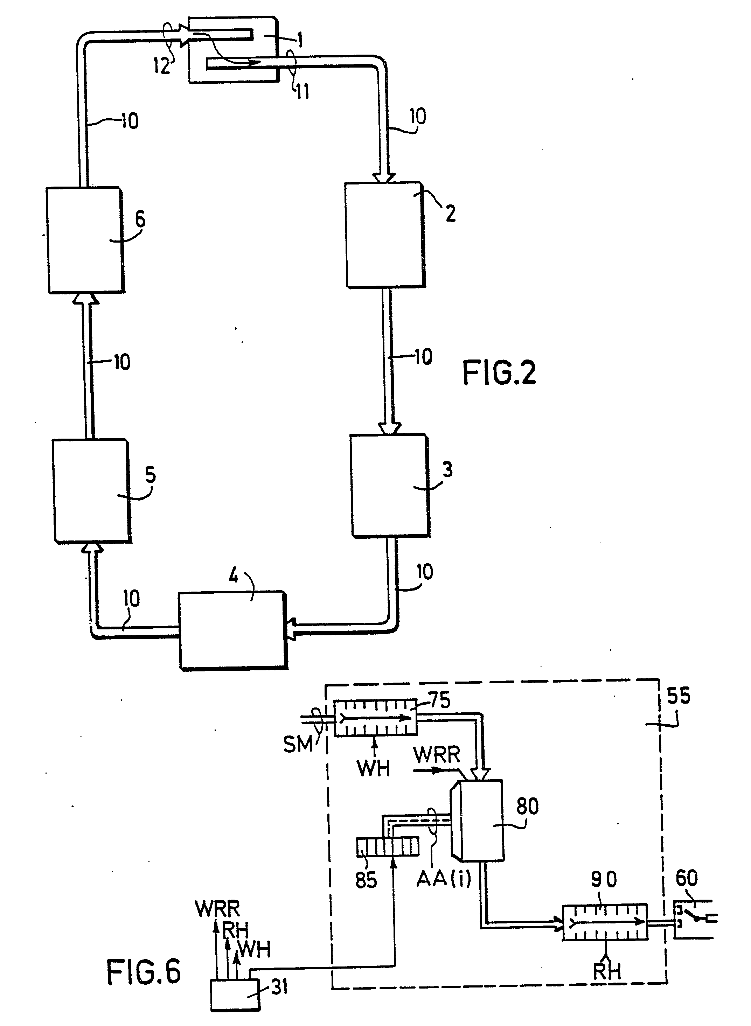

A la figure 2, le dispositif de recalage d'information porte la référence 1. Il est inséré dans un système de télécommunication en boucle du genre de celui décrit dans le brevet français n° 2 165 182 déjà cité. Ce système permet l'échange d'information entre différentes unités 2, 3, 4, 5, 6. Ces unités sont reliées par une ligne 10 transmettant l'information dans le sens indiqué par la flèche. La référence 11 indique une sortie du dispositif 1 où apparaît le multiplex sortant et la référence 12 l'entrée pour le multiplex entrant.

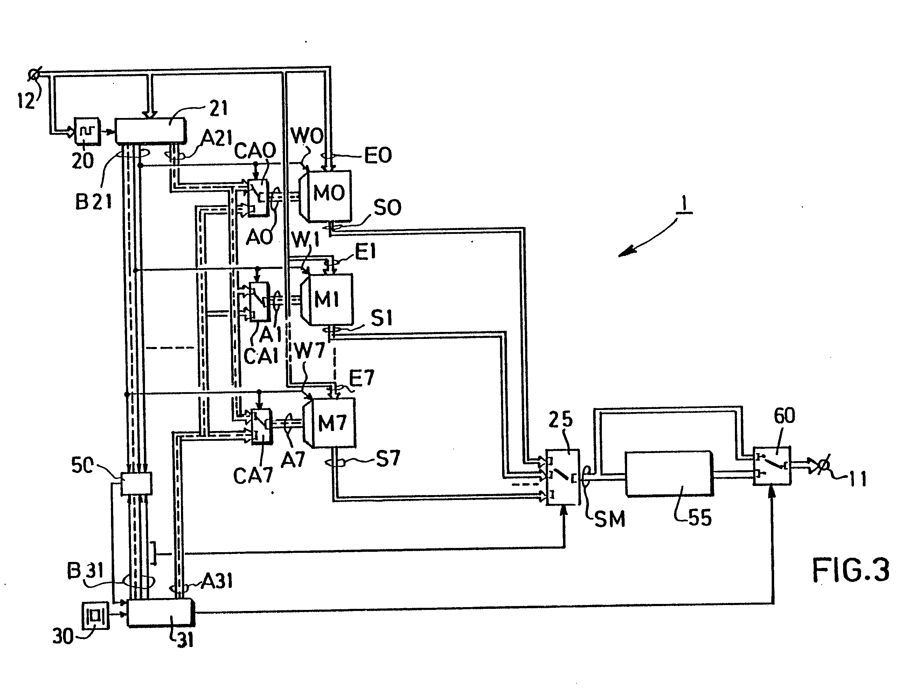

La figure 3 montre en détail le dispositif de recalage 1. La ligne 10 vient se raccorder aux entrée et sortie 12 et 11. Un circuit d'horloge 20 restitue le rythme des informations apparaissant à la borne 12 et fournit ses signaux à un circuit de synchronisation 21 qui, en détectant les différents codes de trame T et de multitrame T̄, élabore des signaux pour permettre l'inscription dans un groupe de mémoires M0, M1, ..., M7 des informations du multiplex entrant. Ces mémoires M0, M1, ... M7 sont munies respectivement d'entrées E0, E1, ... E7 connectées chacune à l'entrée 12, de

sorties S0, S1, ..., S7, connectées à la sortie SM du groupe de mémoires par l'intermédiaire d'un commutateur 25, d'entrées de commande d'écriture W0, W1, W7, connectées au circuit 21 et d'entrées pour code d'adresses A0, A1, ... A7.

Pour fixer le rythme du multiplex sortant, on a prévu un oscillateur à quartz 30, suivi d'un circuit générateur de signaux d'horloge 31. Ce circuit 31 fournit différents signaux utilisés pour la lecture des mémoires M0, M1, ... M7. Chaque mémoire est prévue, dans l'exemple décrit, pour enregistrer une trame, soit 256 éléments binaires. Des premiers fils A21 connectés en sortie du circuit 21 transmettent un chiffre binaire modulo « 256 » qui évolue au rythme binaire du multiplex entrant ; de même, de premiers fils A31 connectés en sortie du circuit 31 transmettent un chiffre binaire, de modulo identique, qui évolue, lui, au rythme binaire du multiplex sortant. Ces codes, transmis par les fils A21 et A31, vont servir de code d'adresses aux mémoires M0 à M7. Les commutateurs CA0, CA1, ..., CA7 déterminent lequel des codes d'adresses des fils A21 ou A31 est appliqué aux entrées A0, A1, ... A7. Les commandes de position de ces commutateurs sont couplées aux commandes d'écritures des mémoires, de sorte que lorsque les fils A21 sont connectés aux entrées pour code d'adresses des mémoires, celles-ci sont mises en position d'écriture. Des seconds fils B21 connectés à la sortie du circuit 21 permettent de sélectionner les mémoires une à une en écriture. Un des fils B21 est connecté à la commande W0, un autre à la commande W1 ... etc... Des seconds fils B31 connectés à la sortie du circuit 31 permettent de sélectionner les mémoires en lecture ; pour cela, ils sont reliés à la commande du commutateur 25. Un comparateur de code 50 compare les codes présents sur les fils B21 et B31 et, en cas d'égalité, agit sur le circuit 31 pour bloquer l'évolution du code aux fils 31.

A la sortie SM est branché un organe de retard 55 qui amène un retard de 16 320 éléments binaires. Un commutateur 60 permet, lorsqu'il est dans une première position, d'envoyer dans le multiplex sortant à la borne 11, les informations des canaux I, la borne 11 étant alors reliée à la sortie SM et, lorsqu'il est dans une deuxième position, d'envoyer les informations des canaux CS avec les codes T et T dans le multiplex, la borne 11 étant alors reliée à la sortie de la ligne 55.

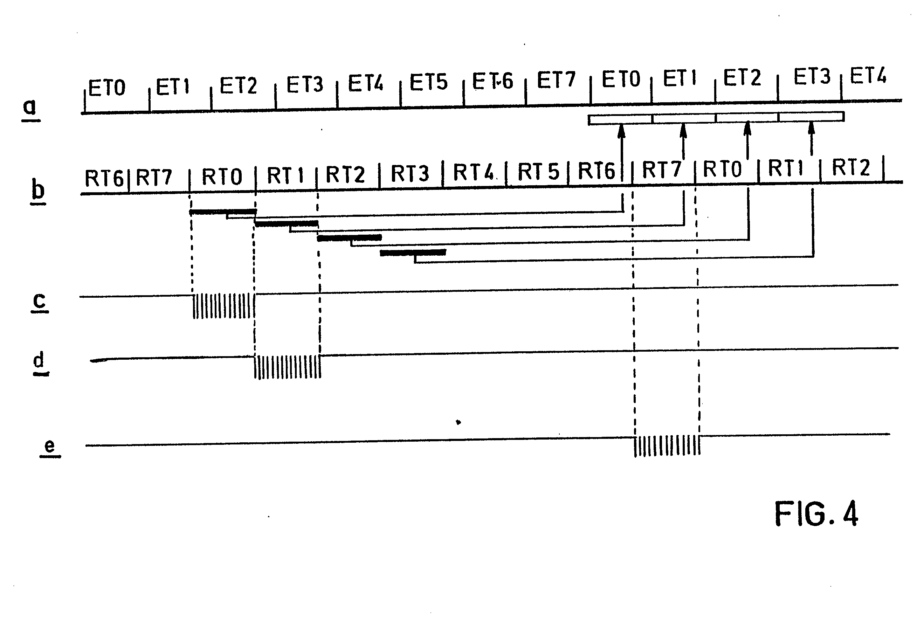

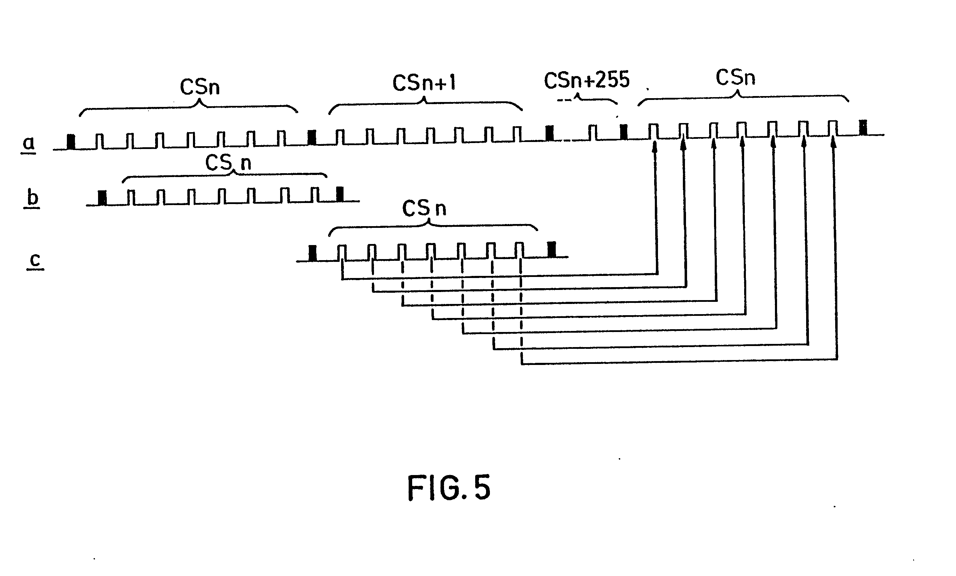

Le fonctionnement du dispositif de l'invention est expliqué à l'aide des figures 4 et 5.

A la ligne a de la figure 4, on a représenté le multiplex sortant. On ne considère que des séries de huit trames successives ET0, ET1, ... ET7, ce qui correspond au fait que la trame émise ET0 était contenue dans la mémoire M0, ET1 dans la mémoire M1, ... etc... La ligne b de cette figure 4 représente le multiplex entrant, là aussi on ne considère que huit trames successives RT0, RT1, ... RT7 qui sont enregistrées respectivement dans les mémoires M0 à M7. L'opération de recalage va consister à mettre les informations contenues dans la trame RT0 dans la trame ET0, les informations de la trame RT1 dans la trame ET1, et ainsi de suite.

La trame RT0 est enregistrée, comme on vient de le dire, dans la mémoire M0. Pour cela, la commande d'écriture W0 est activée et le code aux fils A21 est appliqué aux entrées A0 (voir ligne c de la figure 4), puis la trame RT1 est enregistrée (ligne d) et ainsi de suite jusqu'à la trame RT7 (ligne e). Lorsqu'il faudra émettre la trame ET0, on viendra lire la mémoire M0 qui contient les informations de la trame RT0, et ainsi de suite pour toutes les trames.

A la figure 5, on a fait figurer sous forme de créneaux les différents octets constituant les canaux CS. Les créneaux en noir représentent l'octet de repère de code de trame ou de multitrame. La ligne a représente le multiplex émis, la ligne b le multiplex reçu et, à la ligne c, le multiplex à la sortie SM. Le multiplex à cette sortie est décalé de huit trames par rapport au multiplex à émettre. Pour que les informations correspondent bien au bon numéro du canal, il faut donc décaler les octets des canaux CSi d'une durée égale à 16 320 éléments binaires.

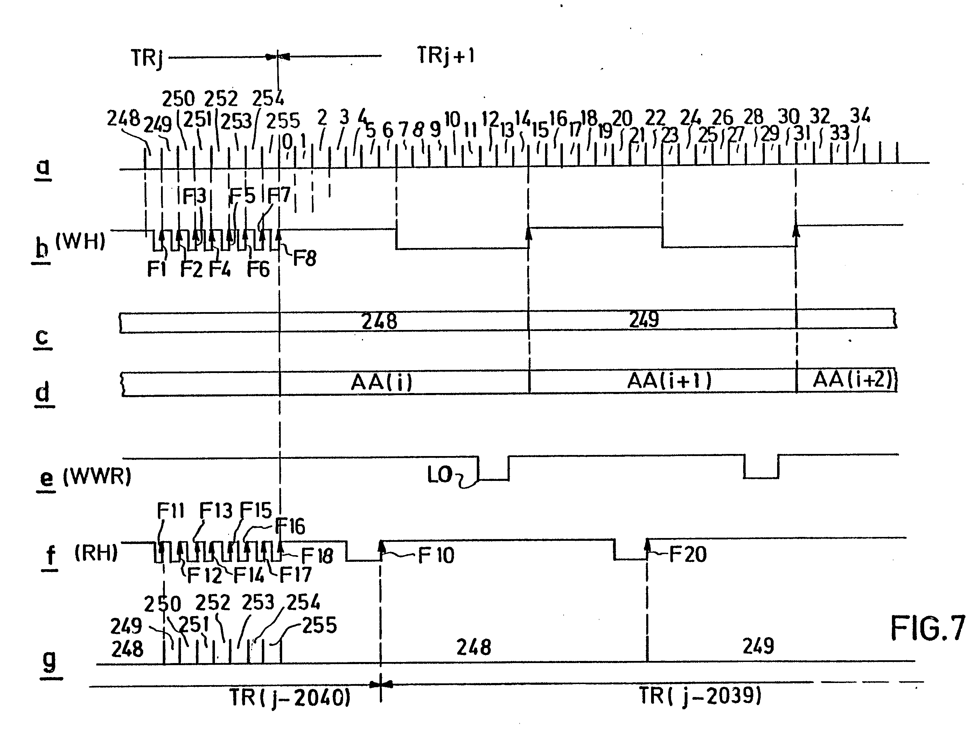

A la figure 6, on a représenté en détail le mode de réalisation de l'organe de retard 55. Il est formé, tout d'abord, d'un registre à décalage 75 dont l'entrée est reliée à la sortie SM et dont la sortie est connectée à l'entrée de données d'une mémoire 80 organisée en 16 312 mots d'un élément binaire ; les adresses AA (i) de ces mots sont fournies par un compteur 85 modulo « 16 312 ». La sortie de la mémoire 80 est reliée à l'entrée d'un registe à décalage 90 dont la sortie est reliée au commutateur 60. Les décalages de ces registres 75 et 90 sont commandés par les signaux transmis respectivement par des fils WH et RH, la mise en position d'écriture ou de lecture de la mémoire 80 est commandée par un signal transmis par un fil WRR. La progression du compteur 85 est commandée par le circuit 31 auquel sont raccordés les fils WRR, RH et WH.

L'explication du fonctionnement de cet organe de retard est faite, tout d'abord, en se reportant à la figure 7.

A la ligne a de cette figure, on fait figurer le numéro des différents intervalles de temps I constituant les différentes trames. Ces numéros ne sont pas accompagnés des caractères I, afin de ne pas surcharger la figure. Les intervalles numérotés 248 à 255 appartiennent à une trame TRj, alors que ceux numérotés de 0 ... 34 appartiennent à la trame suivante TR (j + 1). Ces trames sont considérées au niveau de la borne SM. La ligne b montre l'allure du signal transmis par le fil WH. Seuls les fronts montants de ce signal sont actifs : les fronts F1, F2, ... F8 ; ils permettent d'enregistrer dans le registre 75 les éléments binaires contenus dans les intervalles de temps I248, 249, ... 255, de sorte que l'élément binaire qui est présent après le front F8 à l'entrée de la mémoire 80 est celui qui est contenu dans l'intervalle de temps I248 (ligne c). Cet élément binaire va être enregistré à l'adresse AA (i) (ligne d) fournie par le compteur 85 lorsque le signal sur le fil WWR prend la valeur « 0 » (ligne e point L0). Avant cet enregistrement, l'élément binaire précédent à ce même emplacement défini par l'adresse AA (i) est fourni au registre à décalage 90 au front montant F10 du signal transmis sur le fil RH. Cet élément binaire était enregistré lors de la dernière fois où le compteur 85 fournissait l'adresse AA (i). Cet élément binaire était contenu dans un intervalle de temps d'une trame TR (j + 1 — 2040) soit TR (j — 2039). Les éléments binaires des intervalles de temps 1248 à 1255 de la trame TR (j — 2040) (ligne g) sont émis lors des fronts montants F11 à F18 survenant antérieurement au front montant F10 au signal présent sur le fil RH (ligne f). Les fronts montants F1 à F8, d'une part, et les fronts montants F11 à F18, d'autre part, se succèdent à une cadence rapide qui est celle des intervalles de temps I ; les fronts suivants F20 ... du signal véhiculé sur le fil RH ont un rythme plus lent ; ils se succèdent selon des périodes égales à 16 fois la durée d'un élément binaire. Le passage à « 0 » du signal sur le fil WWR et la progression du compteur 85 se produisent à ce même rythme.

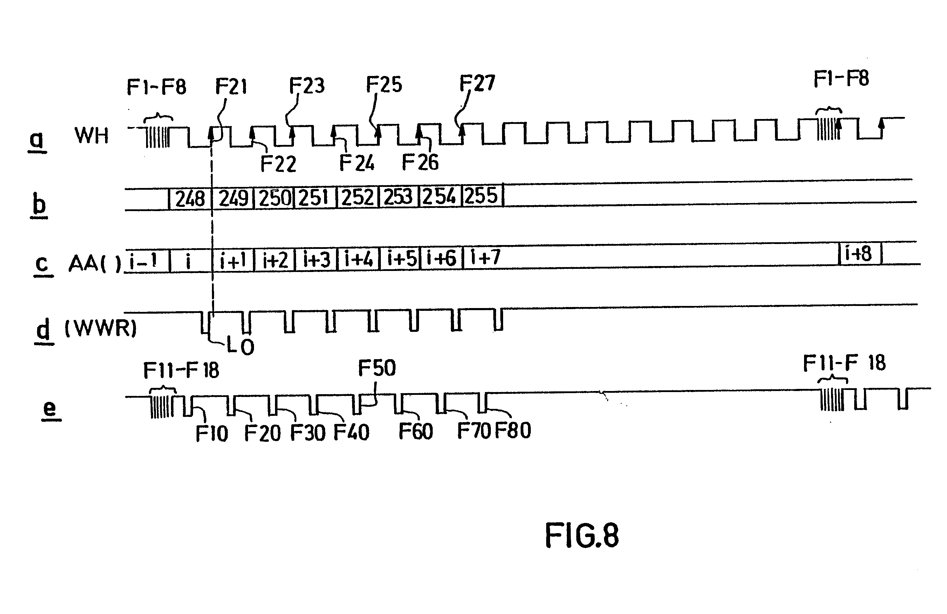

La figure 8 montre pratiquement les mêmes signaux que ceux de la figure 7, mais sur une étendue de temps supérieure ; sur cette figure, les références concernant les mêmes événements que ceux de la figure précédente sont identiques. Entre les fronts F1-F8 correspondant à deux trames successives, on trouve seize fronts régulièrement répartis. Les sept premiers de ces fronts F21-F27 sont actifs et permettent l'enregistrement dans la mémoire 80 à un rythme lent, des données contenues dans le registre 75. Les fronts F10, F20 déjà cités et les fronts F30, F40, F50, ... F80, permettent de mettre les données qui surviennent à la sortie de la mémoire 80 dans le registre 90. Les données sont émises, on le rappelle, lorsque surviennent les fronts montants F11-F18.

## Revendications

1. Dispositif de recalage d'informations pour émettre dans un multiplex temporel sortant des informations provenant d'un multiplex temporel entrant, lesdits multiplex temporels étant prévus pour des canaux à cadence rapide et à cadence lente, les canaux à cadence rapide étant formés d'espaces de temps repérés dans une trame, tandis que les canaux à cadence lente sont formés d'espaces de temps distribués dans des trames successives et repérés dans une multitrame englobant une pluralité de trames, dispositif de recalage d'informations formé d'un ensemble de mémorisation qui est muni d'une entrée et d'une sortie de données et auquel sont affectés, d'une part, un circuit d'écriture pour y inscrire, au rythme du multiplex entrant, les informations de ce multiplex et, d'autre part, un circuit de lecture pour fournir à un organe de retard les informations à cadence lente à la sortie des données dudit ensemble et les informations à cadence rapide à un circuit de combinaison, ce circuit de combinaison étant prévu pour fournir le multiplex sortant en combinant les informations à cadence rapide issues de l'ensemble de mémorisation avec les informations à cadence lente issues de l'organe de retard, caractérisé en ce que l'ensemble de mémorisation est formé de « n », n > 1, mémoires dont la capacité de chacune est suffisante pour contenir une trame, le nombre des trames formant une multitrame étant plus grand que n et en ce qu'il est prévu des moyens pour éviter qu'une même mémoire soit sollicitée en même temps par le circuit de lecture et le circuit d'écriture.

2. Dispositif de recalage d'informations selon la revendication 1, caractérisé en ce que l'organe de retard est constitué à partir d'une mémoire de retard munie d'une entrée pour enregistrer les informations à cadence lente à la sortie dudit ensemble de mémoires et munie d'une sortie pour fournir, après un cycle d'adressage d'un organe d'adressage rattaché à cette mémoire de retard, les informations dans le multiplex sortant.

3. Dispositif de recalage d'informations selon la revendication 2, caractérisé en ce que l'organe de retard comporte, en outre, un registre d'entrée connecté entre l'entrée de la mémoire de retard et la sortie dudit ensemble, un registre de sortie connecté entre la sortie de la mémoire de retard et le circuit de combinaison, des organes de commande d'entrée coopérant avec l'organe d'adressage pour l'enregistrement dans le registre d'entrée des informations contenues dans les espaces de temps des canaux à cadence lente et pour l'emmagasinage dans la mémoire de retard des informations contenues dans ce registre d'entrée entre ces espaces de temps, des organes de commande de sortie coopérant avec l'organe d'adressage pour l'enregistrement dans le registre de sortie des informations à la sortie de la mémoire de retard entre les espaces de temps et pour fournir pendant les espaces de temps des informations au circuit de combinaison.

## Claims

1. An arrangement for re-arranging information for transmitting outgoing time-division multiplexed information obtained from incoming time-division multiplexed information, the said time multiplexes being provided for fast-rate channels and for slow-rate channels, the fast-rate channels being formed by time slots arranged in a frame, while the slow-rate channels are formed by time slots distributed over consecutive frames and arranged in a multi-frame which encompasses a plurality of frames, this arrangement for re-arranging information being formed by a set of memories having a data input and a data output and to which there are assigned on the one hand a write circuit for writing therein at the rate of the incoming multiplex the information of this multiplex and, on the other hand, a read circuit for applying to a delay element the information at the slow rate at the data output of the said set of memories and the information at the fast rate to a combining circuit, this combining circuit being provided for supplying the outgoing multiplexed information by combining the fast-rate information from the set of memories with the slow-rate information from the delay element, characterized in that the set of memories is formed by « n » (n > 1) memories, the capacity of each of which being sufficient to contain one frame, the number of frames forming a multiframe being greater than n, and in that means are provided to avoid that the same memory is requested simultaneously by the read circuit and the write circuit.

2. An arrangement for re-arranging information as claimed in Claim 1, characterized in that the delay element is formed from a delay memory having an input for recording the slow-rate information at the output of the said set of memories and having an output for supplying, after an addressing cycle of an addressing element connected to this delay element the information contained in the outgoing multiplexed information.

3. An arrangement for re-arranging information as claimed in Claim 2, characterized in that the delay element comprises inter alia an input register connected between the input of the delay memory and to the output of the said set of memories, an output register connected between the output and the delay memory and the combining circuit, input control elements cooperating with the addressing means for recording in the input register information contained in the time slots of the slow-rate channels and for storing in the delay memory information contained in this input register between these time slots, output control means cooperating with the addressing means for recording in the output register information present at the output of the delay means between the time slots and for applying during the time slots information to the said combining circuit.

**Patentansprüche**

1. Anordnung zur Neusynchronisierung in einem Ausgangszeitmultiplex zu sendender, von einem Eingangszeitmultiplex herrührender Informationen, wobei die Zeitmultiplexe für Kanäle mit hoher Taktimpulsfrequenz und mit niederiger Taktimpulsfrequenz vorgesehen sind, wobei die Kanäle mit hoher Taktimpulsfrequenz aus in einem Raster markierten Zeitschlitzen gebildet sind, während die Kanäle mit niedriger Taktimpulsfrequenz durch über aufeinanderfolgende Raster verteilte Zeitschlitze gebildet werden, die in einem eine Anzahl Raster zusammenfassenden Superraster markiert sind, wobei diese Anordnung zur Neusynchronisierung von Informationen aus einem mit einem Dateneingang und einem Datenausgang versehenen Speichersystem gebildet ist, dem einerseits ein Einschreibekreis zum mit der Taktimpulsfrequenz des eintreffenden Multiplexes Einschreiben der Informationen dieses Multiplexes und andererseits ein Auslesekreis zugeordnet ist zum einem Verzögerungselement Liefern der Informationen mit der niedrigen Taktimpulsfrequenz am Datenausgang des genannten Speichersystems und zum einem Kombinierkreis Liefern der Informationen mit der hohen Taktimpulsfrequenz, wobei dieser Kombinierkreis dazu vorgesehen ist, den Ausgangszeitmultiplex zu liefern indem die von dem Speichersystem herrührenden Informationen mit der hohen Taktimpulsfrequenz mit den von dem Verzögerungselement herrührenden Informationen mit der niedrigen Taktimpulsfrequenz kombiniert werden, dadurch gekennzeichnet, dass das Speichersystem aus « n », n > 1, Speichern besteht mit je einer Speicherkapazität, die ausreicht zum Erfassen eines Rasters, wobei die Anzahl ein Superraster bildender Raster viel höher ist als n, und dass Mittel vorhanden sind um zu vermeiden, dass ein und derselbe Speicher von einem Auslesekreis und einem Einschreibekreis gleichzeitig beansprucht wird.

2. Anordnung zur Neusynchronisierung von Informationen nach Anspruch 1, dadurch gekennzeichnet, dass das Verzögerungselement aus einem Verzögerungsspeicher aufgebaut ist, der mit einem Eingang versehen ist zum Speichern der Informationen mit niedriger Taktimpulsfrequenz an dem Ausgang des Speichersystems und mit einem Ausgang zum nach einem Adressierzyklus eines mit diesem Verzögerungsspeicher verbundenen Adressierungselementes Liefern der Informationen in dem Ausgangszeitmultiplex.

3. Anordnung zur Neusynchronisierung von Informationen nach Anspruch 2, dadurch gekennzeichnet, dass das Verzögerungselement ausserdem ein Eingangsregister aufweist, das zwischen dem Eingang des Verzögerungsspeichers und dem Ausgang des Systems vorgesehen ist, sowie ein Ausgangsregister, das zwischen dem Ausgang des Verzögerungsspeichers und dem Kombinierkreis vorgesehen ist, weiterhin Eingangssteuerelemente, die mit dem Adressierelement zusammenarbeiten damit in dem Eingangsregister Informationen gespeichert werden, die sich in den Zeitschlitzen der Kanäle mit der niedrigen Taktimpulsfrequenz befinden und zum in dem Verzögerungsspeicher Speichern von Informationen, die sich in dem Eingangsregister zwischen den Zeitschlitzen befinden, wobei zum in dem Ausgangsregister Speichern von Informationen an dem Ausgang des Verzögerungselementes zwischen den Zeitschlitzen und zum während der Zeitschlitze Liefern von Informationen zu dem Kombinierkreis Ausgangssteuerelemente mit dem Adressierelement zusammenarbeiten.

FIG.1

FIG.2

FIG.6

FIG.3

FIG. 4

FIG. 5

FIG.7

FIG.8